# EUROPÄISCHE PATENTSCHRIFT

(11) **EP 3 484 738 B1**
(45) Veröffentlichungstag und Bekanntmachung des Hinweises auf die Patenterteilung: **01.04.2020**
(21) Anmeldenummer: 17734082.5
(22) Anmeldetag: 29.06.2017
(51) Int. Cl.: B60K 35/00, B60K 37/06

(54) **FAHRZEUG MIT EINER BEDIEN- UND ANZEIGEVORRICHTUNG UND VERFAHREN ZUM BETREIBEN EINES SOLCHEN FAHRZEUGS**
VEHICLE HAVING AN OPERATOR CONTROL AND DISPLAY DEVICE AND METHOD FOR OPERATING SUCH A VEHICLE
VÉHICULE ÉQUIPÉ D'UN DISPOSITIF DE COMMANDE ET D'AFFICHAGE ET PROCÉDÉ DE FONCTIONNEMENT D'UN TEL VÉHICULE

(30) Priorität: 13.07.2016 DE 102016212813
(43) Veröffentlichungstag der Anmeldung: 22.05.2019
(73) Patentinhaber: Audi AG, 85045 Ingolstadt (DE)
(72) Erfinder: MERTENS, Joris, 85051 Ingolstadt (DE); HASLINGER, Georg, 85053 Ingolstadt (DE); OLLEFERS, Edwin, 85055 Ingolstadt (DE); KLUG, Markus, 85057 Ingolstadt (DE)
(86) Internationale Anmeldenummer: PCT/EP2017/066165
(87) Internationale Veröffentlichungsnummer: WO 2018/010969

(56) Entgegenhaltungen:
- DE-A1-102005 048 840
- DE-A1-102006 050 016
- DE-A1-102007 005 027
- US-B1- 8 587 546
- Anonymous: "Touch Screen Not Working Android Problem [Fix]", , 27 February 2014 (2014-02-27), XP55599207, Retrieved from the Internet: URL:http://www.techkhoji.com/android-touch -screen-not-working-problem-fix/ [retrieved on 2019-06-25]

## Beschreibung

Die Erfindung betrifft ein Fahrzeug gemäß dem Oberbegriff von Patentanspruch 1 und ein Verfahren zum Betreiben eines Fahrzeugs, gemäß dem Oberbegriff von Patenanspruch 9.

Aus der DE 10 2007 005 027 A1 ist eine Bedien- und Anzeigevorrichtung für ein Kraftfahrzeug mit einer interaktiven Benutzerschnittstelle bekannt. Dabei ist eine Positionsbestimmungseinheit zum Ermitteln einer dreidimensionalen Position eines Betätigungselementes eines Nutzers im Raum vorgesehen. Die Benutzerschnittstelle ist dazu ausgestaltet, interaktiv in Abhängigkeit der ermittelten Position beeinflusst zu werden.

Wie beispielsweise aus "Android Touch Screen Not Working Problem [FIX]", URL: http://www.techkhoji.com/android-touch-screen-not-working-problemfix/, 2014-02-27 entnehmbar ist, sind Touchscreens bekannt, die einem jeweiligen Nutzer eine Bedienung mit mehreren Fingern gleichzeitig ermöglichen.

Aus der US 8,587,546 B1 ist ein Multi-Panel Anzeigesystem eines Fahrzeugs bekannt, welches ein erstes und ein zweites Anzeigegerät aufweist, welche miteinander verbunden sind. Das erste Anzeigegerät und ein damit verbundenes Benutzerschnittstellengerät bilden zusammen einen berührungsempfindlichen Bildschirm. Ein mit den genannten Geräten verbundenes Verarbeitungsgerät ist dazu eingerichtet, auf eine an dem Benutzerschnittstellengerät empfangene Benutzereingabe einen Inhalt zu generieren und auf dem ersten Anzeigegerät darzustellen, und auf eine zweite Benutzereingabe, welche eine Bewegung quer über den berührungsempfindlichen Bildschirm hinweg umfasst, den Inhalt auf dem zweiten Anzeigegerät anzuzeigen.

Aus der US 8,587,546 B1 ist ein Multi-Panel Anzeigesystem eines Fahrzeugs bekannt, welches ein erstes und ein zweites Anzeigegerät aufweist, welche miteinander verbunden sind. Das erste Anzeigegerät und ein damit verbundenes Benutzerschnittstellengerät bilden zusammen einen berührungsempfindlichen Bildschirm. Ein mit den genannten Geräten verbundenes Verarbeitungsgerät ist dazu eingerichtet, auf eine an dem Benutzerschnittstellengerät empfangene Benutzereingabe einen Inhalt zu generieren und auf dem ersten Anzeigegerät darzustellen, und auf eine zweite Benutzereingabe, welche eine Bewegung quer über den berührungsempfindlichen Bildschirm hinweg umfasst, den Inhalt auf dem zweiten Anzeigegerät anzuzeigen.

Aus der DE 10 2012 019 506 A1 ist bereits ein Fahrzeug mit einem Anzeigeinstrument bekannt, bei welchem eine Fensterscheibe des Fahrzeugs als Anzeigefläche genutzt wird. Dabei ist wenigstens ein Teilbereich der Fensterscheibe zwischen zwei Zuständen mit unterschiedlichem Lichtdurchlassverhalten umschaltbar. Die zwei Zustände können sich insbesondere durch ihre Lichtabsorption und/oder durch ihre Reflektivität unterscheiden. Beispielsweise mithilfe einer auf den Fahrer des Fahrzeugs ausgerichteten Kamera kann eine Blickrichtung des Fahrers erfasst werden, anhand derer der Zustand des Teilbereichs festgelegt wird. Darüber hinaus kann der Zustand des Teilbereichs anhand einer prognostizierten Bewegungsrichtung des Fahrzeugs festgelegt werden. Durch eine geeignete Festlegung des Zustands des Teilbereichs kann dabei die Wahrnehmung der von dem Anzeigeinstrument angezeigten Informationen gesteuert werden, sodass je nach Bedarf der jenseits der Anzeigefläche liegende Verkehrsraum oder die Informationen des Anzeigeinstruments insbesondere für den Fahrer des Fahrzeugs besser wahrnehmbar gemacht werden können.

Die DE 10 2006 050 016 A1 offenbart eine Anzeigevorrichtung für ein Kraftfahrzeug mit einer Sensoranordnung zur Bestimmung einer Blickrichtung eines Fahrers des Kraftfahrzeugs und einer zweiten, räumlich von der ersten getrennten Anzeigevorrichtung. Mittels einer Anzeigesteuerung kann dabei eine das Kraftfahrzeug betreffende Information in Abhängigkeit von der Blickrichtung des Fahrers mittels der ersten oder der zweiten Anzeigevorrichtung angezeigt werden. Die Information kann insbesondere auf einer den Fahrgastraum des Kraftfahrzeugs begrenzenden Scheibe angezeigt werden, wozu die Anzeigevorrichtung als Head-up-Display ausgestaltet sein kann. Insgesamt kann also die das Kraftfahrzeug betreffende Information jeweils auf einem Display dargestellt werden, auf das der Fahrer gerade schaut.

Die DE 10 2012 222 522 A1 beschreibt ein projiziertes Unterhaltungssystem für Fondinsassen eines Fahrzeugs. Dabei ist eine Vorrichtung zum Erweitern einer an einer Fläche in dem Fahrzeug angezeigten Grafik unter Verwendung einer Rücksitzunterhaltungsprojektionssystemverwaltungseinrichtung vorgesehen. Mittels eines Grafikerweiterungsmoduls wird ein Eingang erhalten, der eine Reaktion auf die angezeigte Grafik bewirkt und die Grafik auf der Grundlage der Reaktion erweitert. Mittels eines Grafikprojektionssystems werden die erzeugte Grafik und die erweiterte Grafik an der Fläche in dem Fahrzeug angezeigt, wobei die Fläche eine Seitenscheibe und/oder eine Türfläche und/oder eine Säule und/oder eine Sitzlehne und/oder einen Dachhimmel und/oder ein Schiebedach und/oder einen Boden und/oder eine im Wesentlichen transparente Anzeige und/oder eine Ausstrahlung der Anzeige umfasst. Die Systemverwaltungseinrichtung kann ausgestaltet sein, um Anzeigen an mehreren Flächen in dem Fahrzeug zu steuern. Dabei kann auf allen Flächen der gleiche grafische Inhalt dargestellt werden oder es kann für verschiedene Anzeigen, beispielsweise auf der Grundlage des Alters oder spezifischer Interessen des Fahrgasts, der die bestimmte Anzeige sieht, unterschiedlicher Inhalt ausgewählt werden.

Aufgabe der vorliegenden Erfindung ist es, ein Fahrzeug mit einer Bedien- und Anzeigevorrichtung sowie ein Verfahren zum Betreiben eines solchen Fahrzeugs bereitzustellen, welche eine besonders flexible Nutzung des Fahrzeugs ermöglichen.

Diese Aufgabe wird gelöst durch ein Fahrzeug mit den Merkmalen des Patentanspruchs 1 und ein Verfahren mit den Merkmalen des Patentanspruchs 9. Vorteilhafte Ausgestaltungen und Weiterbildungen der Erfindung sind in den abhängigen Patentansprüchen angegeben.

Das erfindungsgemäße Fahrzeug, bei dem es sich bevorzugt um ein Kraftfahrzeug, einen Personenkraftwagen oder ein sonstiges vorwiegend dem Zwecke der Personenbeförderung dienendes Fahrzeug handeln kann, weist eine Erkennungseinrichtung zum Erkennen wenigstens einer Eigenschaft zumindest eines Fahrzeuginsassen und eine mit der Erkennungseinrichtung gekoppelte Bedien- und Anzeigevorrichtung auf. Letztere weist ihrerseits einen Anzeigebereich auf und ist zur Darstellung von Informationen in diesem Anzeigebereich eingerichtet. Darüber hinaus ist mittels der Bedien- und Anzeigevorrichtung in Abhängigkeit von der erfassten Eigenschaft in dem Anzeigebereich zumindest ein Symbol darstellbar. Der Anzeigebereich ist dabei aus mehreren disjunkten Teilbereichen gebildet. Dabei können der Anzeigebereich oder ein oder mehrere seiner Teilbereiche - beispielsweise auch abhängig von einer konkreten Ausgestaltung der Anzeigevorrichtung - prinzipiell nahezu beliebige, insbesondere in oder an einer Fahrgastzelle des Fahrzeugs angeordnete, Flächen oder Flächenbereiche sein Mehrere Teilbereiche des Anzeigebereichs können also auch verschiedenartig, beispielsweise aus unterschiedlichen Materialien gebildet oder unterschiedlichen Einrichtungs- oder Bauteilen des Fahrzeugs zugehörig sein.

Um eine besonders flexible Nutzung des Fahrzeugs zu ermöglichen, ist es erfindungsgemäß vorgesehen, dass die mittels der Erkennungseinrichtung erkannte Eigenschaft eine Position des Fahrzeuginsassen ist und die Bedien- und Anzeigevorrichtung dazu eingerichtet ist, das Symbol in einem in Abhängigkeit von der erkannten Position bestimmten Teilbereich des Anzeigebereichs darzustellen. Dabei wird das Symbol dem Fahrzeuginsassen derart zugeordnet, dass es bei einer in ihrem Ausmaß über einen vorgegebenen Schwellenwert hinausgehenden Positionsveränderung des Fahrzeuginsassen diesem folgt. Die Erkennungseinrichtung kann hierzu beispielsweise eine Kamera oder eine Mehrzahl von Kameras umfassen, welche insbesondere in der Fahrgastzelle des Fahrzeugs angeordnet sein kann beziehungsweise sein können. Es ist vorgesehen, dass der Teilbereich des Anzeigebereichs, in dem das Symbol dargestellt wird verschieden, insbesondere räumlich und/oder funktional getrennt, ist von einem anderen Teilbereich des Anzeigebereiches, in dem die Informationen dargestellt werden.

Es ist erfindungsgemäß also vorgesehen, dass der Anzeigebereich aus mehreren disjunkten Teilen gebildet ist, wobei ein Teil zur Darstellung des Symbols verschieden ist von einem Teil zur Darstellung der Informationen. Derjenige dieser Teile, in dem das Symbol dargestellt wird, ist ein berührungs- und/oder annäherungssensitives Lichtband aus einer Vielzahl von nebeneinander angeordneten Lichtquellen ist, wobei das Symbol jeweils ein gegenüber dem übrigen Lichtband abgehobener begrenzter Teilbereich des Lichtbandes ist. Das Symbol ist als Bedienelement ausgebildet, durch dessen Bedienung die Informationen in dem Anzeigebereich in dem zur Darstellung der Informationen vorgesehenen Teil des Anzeigebereiches in einer Darstellungsposition aufrufbar sind, die mit der Anzeigeposition des Symbols über eine vorgegebene räumliche Beziehung korreliert ist, wobei bei der Positionsveränderung des Fahrzeuginsassen auch die Darstellungsposition der Informationen bewegt wird, sodass diese in derselben räumlichen Beziehung zu der Anzeigeposition des Symbols verbleibt.

Es ist also vorgesehen, dass das Symbol als Bedienelement ausgebildet ist, durch dessen Bedienung die Darstellung der Informationen in dem Anzeigebereich mittels der Bedien- und Anzeigevorrichtung veranlassbar ist. Dazu ist ein zur Darstellung des Symbols verwendeter oder vorgesehener Teilbereich des Anzeigebereichs oder ein entsprechendes, diesen umfassendes Bauteil beispielsweise druck-, berührungs- und/oder annäherungsempfindlich und/oder -sensitiv ausgebildet. So wird eine besonders einfache und intuitive Bedienung oder Bedienbarkeit ohne zusätzliche aufwendige Bedienelemente ermöglicht. Prinzipiell können alternativ oder zusätzlich jedoch auch weitere Bedienarten oder Bedienmöglichkeiten, wie etwa eine Gesten- und/oder Sprachsteuerung vorgesehen sein.

Ein Erfassungsbereich der Erkennungseinrichtung, das heißt also derjenige Bereich, innerhalb dessen die Position des Fahrzeuginsassen erkennbar oder bestimmbar oder ermittelbar ist, kann bevorzugt so auf einen Innenraum des Fahrzeugs oder die Fahrgastzelle, insbesondere auf deren Größe und Gestalt, abgestimmt sein, dass der Fahrzeuginsasse bei beliebigen, zumindest aber beliebigen bestimmungsgemäßen Positionsveränderungen innerhalb der Fahrgastzelle nicht vollständig aus dem Erfassungsbereich gerät. Dies ermöglicht vorteilhaft eine besonders zuverlässige, insbesondere auch kontinuierliche, Positionserfassung oder Positionsbestimmung und/oder Positionsnachverfolgung (Tracking) des Fahrzeuginsassen, wodurch eine besonders zuverlässige Zuordnung des Symbols zu dem Fahrzeuginsassen ermöglicht wird. Bestimmungsgemäße Positionsveränderungen können dabei beispielsweise durch eine Benutzungs- oder Verhaltensvorgabe des Fahrzeugsherstellers und/oder des Gesetzgebers vorgegeben, festgelegt oder eingeschränkt oder etwa solche Positionsveränderungen sein, die eine Sicherheit des Fahrzeuginsassen nicht gefährden. Es kann auch vorgesehen sein, dass der Erfassungsbereich der Erkennungseinrichtung eine Umgebung oder einen Nahbereich des Fahrzeugs zumindest teilweise umfasst. Dadurch kann vorteilhaft bereits bei einer Annäherung einer Person an das Fahrzeug das Symbol dargestellt werden, sodass die Bedien- und Anzeigevorrichtung gegebenenfalls auch bereits von außerhalb des Fahrzeugs nutzbar sein kann. In diesem Sinne ist der Begriff des Fahrzeuginsassen dann auch nicht streng auszulegen, sondern kann auch außerhalb des Fahrzeugs befindliche Personen, insbesondere Nutzer der Bedien- und Anzeigevorrichtung, umfassen, insbesondere sofern sich diese innerhalb des Erfassungsbereiches der Erkennungseinrichtung aufhalten. Die Erfassung der Position des Fahrzeuginsassen kann beispielsweise kontinuierlich oder regelmäßig in festgelegten Zeitabständen erfolgen, wobei die Zeitabstände dann bevorzugt kürzer sind als eine Zeitspanne, die typischerweise von dem Fahrzeuginsassen beispielsweise für einen Sitzplatzwechsel innerhalb des Fahrzeugs benötigt wird.

Dass das Symbol bei einer Positionsveränderung des Fahrzeuginsassen dem Fahrzeuginsassen folgt, bedeutet insbesondere, dass das Symbol nach und/oder während der Positionsveränderung in einem anderen Teilbereich des Anzeigebereichs dargestellt wird als vor der Positionsveränderung, wobei weiterhin der jeweilige Teilbereich in Abhängigkeit von der Position und/oder der Positionsveränderung des Fahrzeuginsassen bestimmt ist oder wird. Dabei kann es vorgesehen sein, dass mit Beginn der Positionsveränderung das Symbol ausgeblendet und nach einem Abschluss der Positionsveränderung in dem entsprechenden anderen Teilbereich eingeblendet wird. Hierbei ist eine Schwelle oder ein Grenzwert für ein Ausmaß oder einen Umfang einer Bewegung des Fahrzeuginsassen vorgesehen, wobei erst bei einem Überschreiten dieses Grenzwertes die Darstellung des Symbols oder der Teilbereich des Anzeigebereichs, in dem das Symbol dargestellt wird, angepasst wird. Dadurch kann vorteilhaft eine unruhige Darstellung des Symbols oder eine unnötige Veränderung einer Darstellungsposition des Symbols vermieden werden, wenn der Fahrzeuginsasse nur eine geringfügige Bewegung oder Positionsveränderung vornimmt. Weiterhin ist es auch denkbar, dass das Symbol auch während der Positionsveränderung des Fahrzeuginsassen dauerhaft sichtbar bleibt und dabei kontinuierlich in wechselnden Teilbereichen des Anzeigebereichs dargestellt wird. Mit anderen Worten kann also eine Art Animation oder Bewegung des Symbols entlang des Anzeigebereichs dargestellt werden. Ebenso ist es auch denkbar, dass das Symbol nur dann dargestellt wird, wenn der Fahrzeuginsasse sich innerhalb eines vorgegebenen Abstandes zu zumindest einem Teilbereich des Anzeigebereichs befindet. Dieser Abstand kann beispielsweise so ausgelegt sein, dass das Symbol durch den Fahrzeuginsassen für eine Bedienhandlung, insbesondere mit einem Finger, erreichbar ist, wenn der Fahrzeuginsasse sich nicht weiter als der vorgegebene Abstand von dem Anzeigebereich oder von dem Teilbereich des Anzeigebereich entfernt befindet oder aufhält.

Das Symbol ist als gegenüber einer Umgebung - etwa durch eine größere Helligkeit, eine andere Farbe, ein Pulsieren oder dergleichen - abgehobener begrenzter Bereich realisiert. Das Symbol kann als Zeichen, als beliebige Grafik, als Wort oder dergleichen realisiert sein. Das Symbol kann auch Teil eines Interfaces, das heißt einer Benutzerschnittstelle sein. Das Symbol dient zum Aufrufen oder Darstellen eines Interfaces oder beliebiger anderer Informationen oder Darstellungen auf dem Anzeigebereich. Dabei ist es insbesondere vorgesehen, dass das derart aufgerufene oder dargestellte Interface und/oder die derart aufgerufenen oder dargestellten Informationen in einem weiteren Teilbereich des Anzeigebereichs dargestellt werden, der mit der Darstellungsposition des Symbols und damit zumindest indirekt auch mit der erkannten Position des Fahrzeuginsassen verknüpft oder korreliert ist. Es gibt also eine Zuordnung sowohl zwischen der erkannten Position des Fahrzeuginsassen und dem Teilbereich, in dem das Symbol dargestellt wird, als auch zwischen diesem Teilbereich, das heißt der Darstellungsposition des Symbols, und einer Darstellungsposition der durch eine direkte oder indirekte Interaktion mit dem Symbol aufgerufenen, dargestellten oder angezeigten Informationen, Grafiken oder dergleichen.

Die Erfindung bietet den Vorteil, dass eine Nutzung einer dem Symbol zugeordneten Funktionalität, eines Interfaces, von dem das Symbol ein Teil ist, und/oder von durch Interaktionen mit dem Symbol zugänglichen Informationen, Interfaces oder dergleichen flexibel und dynamisch an unterschiedlichen Positionen innerhalb des Fahrzeugs und/oder an dem Fahrzeug möglich ist. Damit kann der Nachteil bisheriger bekannter ortsfester Interfaces umgangen werden, dass deren Bedienung nur in oder an einer einzigen Position oder aus einer bestimmten Position heraus ergonomisch optimal möglich ist. Damit kann der Fahrzeuginsasse also seine Position innerhalb des Fahrzeugs frei wählen, ohne hinsichtlich seiner Bedien-, Anzeige- und/oder Interaktionsmöglichkeiten eingeschränkt zu sein.

Je nach Ausgestaltung der Interaktionsmöglichkeiten mit dem Symbol und/oder der dem Symbol zugeordneten Funktionalitäten kann auch eine Nutzung oder Steuerung beispielsweise mobiler Endgeräte oder mittels mobiler Endgeräte nutzbarer oder steuerbarer Funktionalitäten an verschiedenen Positionen ermöglicht werden, ohne dass das mobile Endgerät an der entsprechenden Position gehalten oder fixiert werden müsste. Insgesamt kann somit auch eine Sicherheit insbesondere bei einem Betrieb des Fahrzeugs verbessert werden, da ein Erreichen oder eine Zugänglichkeit des Symbols und der damit verknüpften Funktionalitäten, Informationen und/oder Interfaces jederzeit besonders einfach und ohne sicherheitsbeeinträchtigende Bewegungen oder Körperhaltungen möglich ist. Da eine Nutzung ungesicherter, das heißt nicht fixierter, also beispielsweise lediglich in einer Hand gehaltener, mobiler Endgeräte somit nicht mehr notwendig ist, kann verhindert werden, dass sich diese bei einer Unfall- oder Aufprallsituation in gefährlicher Art und Weise unkontrolliert innerhalb des Fahrzeugs bewegen. Weiterhin können durch die Erfindung dem Fahrzeuginsassen, insbesondere allen Fahrzeuginsassen, vorteilhaft eine Vielzahl von Funktionalitäten und Informationen zugänglich gemacht oder bereitgestellt werden, welche bisher oftmals beispielsweise nur einem jeweiligen Fahrer oder Beifahrer des Fahrzeugs zugänglich sind oder zur Verfügung stehen. Bevorzugt und besonders vorteilhaft handelt es sich bei dem erfindungsgemäßen Fahrzeug um ein pilotiertes Fahrzeug, das heißt also ein für ein hochautomatisiertes und/oder autonomes Fahren eingerichtetes Fahrzeug.

In weiterer Ausgestaltung der Erfindung ist es vorgesehen, dass das Fahrzeug eine Fensterscheibenanordnung aufweist, welche zumindest bereichsweise zumindest als Teil des Anzeigebereichs ausgebildet ist. Mit anderen Worten kann die Fensterscheibenanordnung oder ein Teil der Fensterscheibenanordnung zur Darstellung von Informationen eingerichtet sein. Dabei muss der Anzeigebereich jedoch nicht auf die Fensterscheibenanordnung beschränkt sein, sondern kann zusätzlich auch andere Flächen oder Flächenbereiche umfassen. So kann sich der Anzeigebereich der Bedien- und Anzeigevorrichtung zumindest teilweise oder bereichsweise auch außerhalb oder neben der Fensterscheibenanordnung erstrecken. Dies gilt insbesondere für denjenigen Teilbereich oder diejenigen Teilbereiche, die zur Darstellung des Symbols vorgesehenen sind. Bevorzugt kann beispielsweise an oder in einem in Fahrzeughochrichtung unterhalb einer jeweiligen Fensterscheibe der Fensterscheibenanordnung oder einer Fensteröffnung angeordneten Interieurbauteil des Fahrzeugs als Teilbereich des Anzeigebereiches und als Teil der Bedien- und Anzeigevorrichtung eine, insbesondere bandartig ausgedehnte, Beleuchtungs- und/oder Anzeigeeinrichtung angeordnet sein. Eine derartige Anzeigeeinrichtung weist vorliegend eine Vielzahl nebeneinander angeordneter Lichtquellen - beispielsweise Leuchtdioden - auf. Die Anzeigeeinrichtung kann auch in ihrer Lichtdurchlässigkeit steuerbarer Bereiche aufweisen. Durch eine gezielte Ansteuerung ist so ein begrenzter Teilbereich gegenüber der übrigen Einrichtung hervorgehoben als Symbol darstellbar oder nutzbar. Die übrige bandartige Beleuchtungs- und/oder Anzeigeeinrichtung kann beispielsweise - zumindest während eines Betriebs des Fahrzeugs - dauerhaft mit gegenüber dem Symbol verringerter Helligkeit leuchten oder beleuchtet werden.

Die Fensterscheibenanordnung kann beispielsweise die Fahrgastzelle des Fahrzeugs zumindest bereichsweise begrenzen und/oder innerhalb des Fahrzeugs oder der Fahrgastzelle mehrere Raumbereiche ganz oder teilweise voneinander abgrenzen. Insbesondere kann die Fensterscheibenanordnung dabei jeweilige Seitenscheiben, das heißt seitliche Fensterscheiben, sowie jeweilige - auch geteilte - Front- und Heckscheiben des Fahrzeugs umfassen.

Die Fensterscheibenanordnung kann beispielsweise dadurch zumindest bereichsweise zur Darstellung von Informationen eingerichtet sein, dass jeweilige Fensterscheiben mit einem transparenten Bildschirm ausgestattet oder als transparenter Bildschirm ausgebildet sind.

Gemäß einer Ausgestaltung der Erfindung ist der Anzeigebereich zumindest bereichsweise als aktiver Bildschirm und/oder als mittels Berührung bedienbares Bedienelement (Touchscreen oder Touchpad) ausgebildet. Ein aktiver Bildschirm oder ein aktives Display zeichnet sich dabei dadurch aus, dass der physikalische Vorgang, der einen Bildpunkt erzeugt auch zur Aussendung von Licht führt. Damit ist also keine separate Hintergrundbeleuchtung zur Darstellung von Bildern, Grafiken oder dergleichen notwendig, wodurch vorteilhaft die Nutzung beispielsweise der Fensterscheibenanordnung als Bildschirm unabhängig von äußeren Gegebenheiten oder der Umgebung des Fahrzeugs zuverlässig möglich ist. Die Ausgestaltung des Anzeigebereichs, insbesondere der Fensterscheibenanordnung, als Touchscreen ermöglicht vorteilhaft eine besonders einfache und intuitive Bedienbarkeit und kann durch die dadurch ermöglichte Einsparung von zusätzlichen Bedienelementen zu einer Senkung beispielsweise eines Herstellungsaufwandes für das Fahrzeug beitragen. Konkret kann auf die als Anzeigebereich dienende Fläche - beispielsweise die Fensterscheibe oder die Fensterscheibenanordnung - oder in diese integriert beispielsweise ein Aktiv-Matrix-Display auf Grundlage einer TFT-Bildschirmtechnologie (von englisch "Thin-film transistor") insbesondere unter Verwendung von organischen Leuchtdioden (AMOLED, von englisch "active-matrix organic light-emitting diodes") vorgesehen sein. Im Gegensatz zur Verwendung einer Projektor- oder Head-up-Display-Technik kann so die Darstellung nicht durch Verdeckung eines Strahlenweges beeinträchtigt werden.

Es ist jedoch auch denkbar, dass alternativ oder zusätzlich eine andere Anzeigetechnologie verwendet wird. Beispielsweise kann ein Projektor oder eine Projektionseinrichtung vorgesehen sein. Dadurch können vorteilhaft und mit geringem Aufwand vielfältige Flächen als Anzeigebereich genutzt werden. Prinzipiell können dabei auch Flächen als Anzeigebereich genutzt werden, die nicht Teil des Fahrzeugs sind.

In weiterer Ausgestaltung der Erfindung ist es vorgesehen, dass die auf die Bedienung des Symbols hin in dem Anzeigebereich dargestellten Informationen hinsichtlich des Fahrzeuginsassen, der die Bedienung vorgenommen hat personalisiert sind. Mit anderen Worten können also beispielsweise eine Art oder eine Auswahl der Informationen ebenso wie das Symbol selbst dem Fahrzeuginsassen zugeordnet werden, sodass beispielsweise bei einer Positionsveränderung des Fahrzeuginsassen und einer erneuten Bedienung des Symbols nicht eine vorgesehene Standardinformation oder -grafik oder dergleichen angezeigt oder dargestellt werden muss. Stattdessen kann eine zuvor auf den jeweiligen Fahrzeuginsassen abgestimmte und/oder von diesem nach seinen Bedürfnissen eingestellte Darstellung über die Positionsveränderung hinweg aufrechterhalten und demselben Fahrzeuginsassen nach dessen Positionsveränderung weiterhin oder erneut angezeigt werden. Es kann auch eine Speicherung derartiger Einstellungen und weiterer Präferenzen sowie deren Abruf aus einer entsprechenden Speichereinrichtung bei einer Bedienung des Symbols vorgesehen sein. Eine solche Speichereinrichtung kann Teil der Bedien- und Anzeigevorrichtung, also Teil des Fahrzeugs, aber auch von dem Fahrzeug unabhängig sein, wobei auch Kombinationen denkbar sind In ähnlicher Art und Weise kann auch eine Darstellung oder Ausgestaltung des Symbols dem jeweiligen Fahrzeuginsassen zugeordnet und entsprechend personalisiert sein. Insgesamt kann so ein Bedienkomfort gesteigert und beispielsweise ein Zugriff auf bestimmte Informationen beschleunigt werden. Die Personalisierung der Informationen kann beispielsweise auch zuletzt oder besonders häufig abgerufene oder dargestellte Informationen und/oder vorgenommene Einstellungen und/oder weitere mittels der Erkennungseinrichtung erkannte oder erfasste Eigenschaften des Fahrzeuginsassen umfassen oder berücksichtigen. Beispielsweise kann hier eine Alterserkennung und eine entsprechende Anpassung der Darstellung der Informationen und/oder eine Anpassung einer Verfügbarkeit bestimmter Informationen oder Inhalte möglich sein.

In weiterer Ausgestaltung der Erfindung ist es vorgesehen, dass der Anzeigebereich zur Darstellung des Symbols an einem eine Fensterscheibenanordnung zumindest teilweise einfassenden Rahmenteil des Fahrzeugs angeordnet ist. Dadurch kann vorteilhaft eine Einschränkung oder Beeinträchtigung eines Sichtbereiches der Fensterscheibenanordnung oder eines Blickfeldes des Fahrzeuginsassen, beispielsweise auf eine Umgebung des Fahrzeugs, vermieden werden. Weiterhin ist so die Darstellung des Symbols in konsistenter und gleichbleibender Art und Weise auch unabhängig von einer Verstellung der Fensterscheibenanordnung, insbesondere beispielsweise bei vollständig versenkter oder heruntergefahrener Fensterscheibe, zuverlässig möglich. Dies ist besonders dann relevant und vorteilhaft, wenn die Fensterscheibenanordnung als Teil des Anzeigebereiches zur Darstellung der Informationen verwendet wird, verwendet werden soll oder vorgesehen ist.

In weiterer Ausgestaltung der Erfindung ist es vorgesehen, dass die Erkennungseinrichtung dazu eingerichtet ist, gleichzeitig die jeweilige Position mehrerer Fahrzeuginsassen zu erkennen, und dass zudem mittels der Bedien- und Anzeigevorrichtung gleichzeitig jeweils, das heißt für jeden Fahrzeuginsassen, zumindest ein Symbol in einem jeweiligen in Abhängigkeit von der erkannten Position bestimmten Teilbereich des Anzeigebereich darstellbar ist. Mit anderen Worten können also auch mehrere sich gleichzeitig in dem Fahrzeug aufhaltende Fahrzeuginsassen mittels eines jeweils eigenen, ihnen zugeordneten Symbols die Bedien- und Anzeigevorrichtung unabhängig voneinander nutzen.

In weiterer Ausgestaltung der Erfindung ist es vorgesehen, dass die Bedien- und Anzeigevorrichtung dazu eingerichtet ist, jedem der Fahrzeuginsassen jeweils zumindest eines der gleichzeitig dargestellten Symbole derart zuzuordnen, dass das jeweilige Symbol bei einer Positionsveränderung des jeweiligen Fahrzeuginsassen diesem folgt. Bevorzugt ist dabei die Erkennungseinrichtung dazu eingerichtet, auch bei einer gleichzeitigen Bewegung oder Positionsveränderung mehrerer Fahrzeuginsassen die Zuordnung der Symbole zu den jeweiligen Fahrzeuginsassen aufrecht zu erhalten.

In weiterer Ausgestaltung der Erfindung ist es vorgesehen, dass mittels der Erkennungseinrichtung der Fahrzeuginsasse, insbesondere eine Mehrzahl von Fahrzeuginsassen, identifizierbar ist. Durch eine solche, insbesondere eindeutige, Identifizierung eines, bevorzugt aller, Fahrzeuginsassen wird es vorteilhaft ermöglicht, eine noch bessere Personalisierung und Anpassung der Darstellung des Symbols und/oder der dargestellten oder darzustellenden Informationen vorzunehmen. Dabei können durch eine entsprechende Speicherung jeweiliger Identitäten und zugeordneter Einstellungen, beispielsweise in Form eines jeweiligen Benutzerprofils, besonders vorteilhaft auch über Betriebsunterbrechungen der Bedien- und Anzeigevorrichtung und/oder des Fahrzeugs hinweg die jeweiligen Zuordnungen aufrecht erhalten werden. Insbesondere, aber nicht ausschließlich, in diesem Zusammenhang kann eine Identifizierung oder Erkennung des oder der Fahrzeuginsassen zusätzlich oder alternativ auch anhand eines jeweiligen mobilen elektronischen Geräts, insbesondere eines Endgeräts, wie etwa einem Mobiltelefon (Smartphone) oder dergleichen, vorgenommen oder unterstützt werden. Dabei ist es denkbar, dass für die Personalisierung und/oder Auswahl der dargestellten oder darzustellenden Informationen auch Informationen oder Daten, die auf dem elektronischen Gerät gespeichert sind, zwischen dem Gerät und der Bedien- und Anzeigevorrichtung einseitig oder wechselseitig übertragen oder ausgetauscht werden. Ebenfalls kann ein Zugriff auf eine außerhalb des Fahrzeugs vorhandene Datenquelle, beispielsweise über eine kabellose Datenverbindung, denkbar sein.

Ein erfindungsgemäßes Verfahren dient zum Betreiben eine Fahrzeugs mit einer Erkennungseinrichtung zum Erkennen einer Eigenschaft zumindest eines Fahrzeuginsassen und einer mit der Erkennungseinrichtung gekoppelten und einen Anzeigebereich aufweisenden Bedien- und Anzeigevorrichtung. Mittels der Bedien- und Anzeigevorrichtung sind dabei in dem Anzeigebereich Informationen darstellbar. Mittels der Erkennungseinrichtung wird als Eigenschaft des zumindest einen Fahrzeuginsassen fortlaufend eine jeweilige Position des zumindest einen Fahrzeuginsassen erkannt und mittels der Bedien- und Anzeigevorrichtung wird in einem in Abhängigkeit von der jeweils erkannten Position des jeweiligen Fahrzeuginsassen bestimmten Teilbereich des Anzeigebereichs der Bedien- und Anzeigevorrichtung ein jeweiliges dem Fahrzeuginsassen zugeordnetes Symbol dargestellt. Das Symbol ist dabei dem Fahrzeuginsassen derart zugeordnet, dass es bei einer Positionsveränderung des Fahrzeuginsassen diesem folgt. Eine fortlaufende Erkennung der Position eines Fahrzeuginsassen kann dabei sowohl eine kontinuierliche Positionserkennung und/oder -verfolgung als auch beispielweise eine in regelmäßigen Zeitabständen vorgenommene Positionserkennung meinen. Ebenso ist es denkbar, dass der Erfassungsbereich der Erkennungseinrichtung kontinuierlich von einem Bewegungsmelder überwacht wird und eine Positionserkennung erst dann ausgeführt wird, wenn der Bewegungsmelder eine, insbesondere eine in ihrem Ausmaß oder Umfang über einen vorgegebenen Grenz- oder Schwellwert hinausgehende, Bewegung reg istriert.

Es ist vorgesehen, dass das Symbol als Bedienelement ausgebildet ist und auf eine Bedienung des Symbols durch den Fahrzeuginsassen hin die Informationen in dem Anzeigebereich dargestellt werden.

Das Symbol wird dem Fahrzeuginsassen derart zugeordnet, dass es bei einer in ihrem Ausmaß über einen vorgegebenen Schwellenwert hinausgehenden Positionsveränderung des Fahrzeuginsassen diesem folgt. Das Symbol wird in einem als berührungs- und/oder annäherungssensitives Lichtband aus einer Vielzahl von nebeneinander angeordneten Lichtquellen ausgebildeten Teil des Anzeigebereiches dargestellt, der von einem Teil disjunkt ist, in dem die Informationen dargestellt werden. Das Symbol wird jeweils als ein gegenüber dem übrigen Lichtband abgehobener begrenzter Teilbereich des Lichtbandes dargestellt. Die Informationen werden auf eine Bedienung des als Bedienelement ausgebildeten Symbols in einer Darstellungsposition dargestellt, die mit der Anzeigeposition des Symbols über eine vorgegebene räumliche Beziehung korreliert ist. Bei der Positionsveränderung des Fahrzeuginsassen wird auch die Darstellungsposition der Informationen bewegt, sodass diese in derselben räumlichen Beziehung zu der Anzeigeposition des Symbols verbleibt.

Unabhängig von anderweitigen Ausgestaltungen ist es bevorzugt vorgesehen, dass einer Person automatisch ein Symbol zugeordnet und dargestellt wird, sobald diese sich dem Fahrzeug nähert oder in das Fahrzeug einsteigt. Entsprechend wird das Symbol automatisch ausgeblendet, sobald die Person aus dem Fahrzeug aussteigt oder sich von dem Fahrzeug entfernt.

Um die beschriebenen und weitere Funktionen der Bedien- und Anzeigevorrichtung sowie der Erkennungseinrichtung zu realisieren und zu steuern können zusätzlich eine Steuereinrichtung oder ein Steuergerät als Teil der jeweiligen Vorrichtung Einrichtung und/oder des Fahrzeugs vorgesehen sein.

Die bisher und im Folgenden sowie in den Patentansprüchen beschriebenen funktionalen Ausbildungen des erfindungsgemäßen Fahrzeugs sowie die entsprechenden Vorteile sind entsprechend sinngemäß auch auf das erfindungsgemäße Verfahren und/oder die zur Ausführung des erfindungsgemäßen Verfahrens verwendeten Einrichtungen und Bauteile übertragbar und umgekehrt.

Weitere Vorteile, Merkmale und Einzelheiten der Erfindung ergeben sich aus der nachfolgenden Beschreibung eines bevorzugten Ausführungsbeispiels sowie anhand der Zeichnungen. Dabei zeigen:
- Fig. 1: Eine schematische und stark vereinfachte Perspektivdarstellung eines Fahrzeugs mit einer jeweils umlaufenden Fensterscheibenanordnung und Bedien- und Anzeigevorrichtung;
- Fig.2: Eine schematische und ausschnittweise Perspektivdarstellung einer Seitenwand eines Fahrzeugs mit einer Fensterscheibe und einer teilweise dargestellten Bedien- und Anzeigevorrichtung; und
- Fig. 3: eine schematische und perspektivische Detailansicht einer der Darstellung aus Fig. 2 entsprechenden Darstellung.

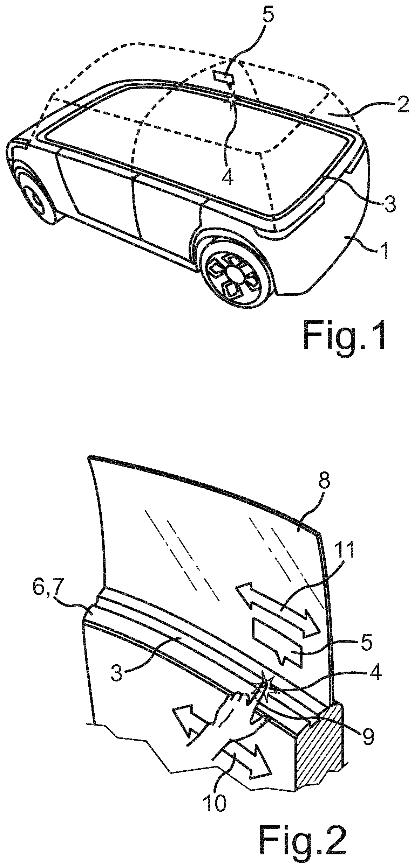

Fig. 1 zeigt in einer schematischen Perspektivansicht ein Fahrzeug 1 mit einer in Fahrzeugquer- und Fahrzeuglängsrichtung umlaufenden Fensterscheibenanordnung 2, welche zumindest bereichsweise zur Darstellung von Informationen eingerichtet ist. Dazu ist an der Fensterscheibenanordnung 2 oder in diese integriert ein transparenter Bildschirm, welcher bevorzugt auf organischen Leuchtdioden basiert, vorgesehen. Der Bildschirm ist vorliegend zudem für eine Bedienung mittels Berührung vorgesehen, es handelt sich also um einen Touchscreen. Innenseitig der Fensterscheibenanordnung 2 ist als Teil einer Bedien- und Anzeigevorrichtung des Fahrzeugs 1 ein ebenfalls umlaufendes Lichtband 3 angeordnet. Das Lichtband 3 kann beispielsweise eine Vielzahl entlang der umlaufenden Erstreckung nebeneinander angeordneter Leuchtdioden oder dergleichen umfassen und mit einem hier nicht dargestellten Steuergerät sowie einem hier ebenfalls nicht dargestellten elektrischen Bordnetz des Fahrzeug 1 verbunden sein. Vorliegend ist eine einem Innenraum des Fahrzeug 1 und damit einem jeweiligen Fahrzeuginsassen zugewandte Oberfläche des Lichtbandes 3 ebenfalls durch Berührung bedienbar. Sowohl das Lichtband 3 als auch zumindest ein Teil der Fensterscheibenanordnung 2 sind hier also Teile eines Anzeigebereiches.

Bei dem Fahrzeug 1 handelt es sich bevorzugt um ein pilotiertes Fahrzeug, welches gegenüber herkömmlichen Fahrzeugen dementsprechend eine größere Flexibilität oder Gestaltungsfreiheit hinsichtlich eines Innenraums, einer Anordnung von Sitzgelegenheiten und somit auch jeweiligen Positionen oder bestimmungsgemäßen Aufenthaltsorten jeweiliger Fahrzeuginsassen aufweist. Dementsprechend ist hier auch eine besonders flexible Möglichkeit zur Bedienung oder Nutzung der oder allgemein zur Interaktion mit der Bedien- und Anzeigevorrichtung besonders vorteilhaft.

Hier nicht dargestellt weist das Fahrzeug 1 weiterhin eine Erkennungseinrichtung auf, welche vorliegend eine Kamera oder eine mehrere Kameras umfassende Kameraanordnung umfasst. Mittels der Erkennungseinrichtung kann eine Person, die sich dem Fahrzeug 1 nähert, in das Fahrzeug 1 einsteigt und/oder sich in dem Fahrzeug 1 aufhält und/oder bewegt identifiziert werden. Der Einfachheit halber wird hier im Folgenden zusammenfassend von Fahrzeuginsassen gesprochen. Eine Identifikation kann beispielsweise über eine Auswertung und/oder einen Vergleich von aufgenommenen Bilddaten mit einer Datenbank oder entsprechender in einer Speichereinrichtung vorgehaltenen Daten oder Informationen erfolgen. Es ist aber auch eine nur temporäre Identifikation denkbar, bei der beispielsweise nur während eines Betriebszyklus des Fahrzeugs 1 eine individuelle Unterscheidbarkeit der während des Betriebszyklus in dem Fahrzeug befindlichen Fahrzeuginsassen beabsichtigt und gewährleistet ist.

Darüber hinaus kann mittels der Erkennungseinrichtung auch eine jeweilige Position des oder der identifizierten Fahrzeuginsassen erkannt werden. Wird ein Fahrzeuginsasse, insbesondere innerhalb des Fahrzeugs 1, erkannt, so wird dies durch ein Symbol 4 angezeigt. Das Symbol 4 ist dabei vorliegend ein begrenzter Teilbereich des Lichtbandes 3, welcher gegenüber dem übrigen Lichtband 3 heller leuchtet. Eine genaue Darstellungs- oder Anzeigeposition des Symbols 4 wird dabei in Abhängigkeit von der erkannten Position des identifizierten Fahrzeuginsassen bestimmt. Dabei wird das Symbol 4 bevorzugt in einem dem identifizierten Fahrzeuginsasse oder dessen erkannter Position möglichst nahen und ergonomisch möglichst einfach und gut von dem Fahrzeuginsassen erreichbaren Teilbereich des Lichtbandes 3 angezeigt. Sobald sich der Fahrzeuginsasse innerhalb des Fahrzeugs bewegt und also eine Positionsveränderung vornimmt, wird das Symbol 4 an der bisherigen, vor der Positionsveränderung eingenommenen Stelle ausgeblendet und an einer anderen Stelle oder in einem anderen Teilbereich des Lichtbandes 3 eingeblendet, der in Abhängigkeit von der neuen Position des Fahrzeuginsasse in der beschriebenen Art und Weise bestimmt wird. Somit folgt das Symbol 4 also dem Fahrzeuginsasse, dem es bei dessen Erkennen zugeordnet worden ist.

In entsprechender Art und Weise können auch mehrere Fahrzeuginsassen erkannt werden, denen dann jeweils ein eigenes Symbol 4 zugeordnet und angezeigt werden kann. Dabei ist jedes der Symbole 4 dann unabhängig von den übrigen Symbolen 4.

Bevorzugt kann es vorgesehen sein, dass das Lichtband 3 zwar berührungsempfindlich oder berührungssensitiv, das heißt mittels Berührung bedienbar ausgebildet ist, dabei jedoch lediglich einer Berührung des Symbols 4, das heißt des jeweils dem Symbol 4 entsprechenden Teilbereichs des Lichtbandes 3, eine Funktionalität zugeordnet ist. Mit anderen Worten ist also nicht das gesamte Lichtband 3 dauerhaft als Bedienelement ausgebildet und eine Berührung des Lichtbandes 3 in einem aktuell nicht als Symbol 4 verwendeten Teilbereich bleibt ohne Folgen. Damit kann vorteilhaft eine versehentliche oder uneindeutige Bedienung vermieden werden.

Bei einer Berührung des Symbols 4 wird vorliegend mittels des an oder in der Fensterscheibenanordnung 2 vorgesehenen Bildschirms ein Interface 5 dargestellt, angezeigt oder eingeblendet. Bei dem Interface 5 kann es sich um eine Schnittstelle zur Bedienung weiterer Funktionalitäten beispielsweise des Fahrzeugs 1, eine beliebige Grafik oder Informationsdarstellung oder dergleichen handeln.

Fig. 2 zeigt eine schematische und ausschnittweise Perspektivansicht einer Seitenwand 6 eines Fahrzeugs, beispielsweise des Fahrzeugs 1 aus Fig.1. Die Seitenwand 6 kann auch Teil einer Tür des Fahrzeugs 1 sein. An einer dem Fahrzeugsinnenraum zugewandte Seite weist die Seitenwand 6 oder ein an dieser angeordnetes Interieurbauteil, etwa eine Innenverkleidung, des Fahrzeugs 1 eine Oberfläche 7 auf, welche vorliegend beispielsweise zumindest nahezu parallel zu einem Boden des Fahrzeugs 1 und beispielsweise zumindest nahezu senkrecht zu einer Fensterscheibe 8 angeordnet sein kann. In diese Oberfläche 7 ist vorliegend das Lichtband 3 integriert. Die Fensterscheibe 8 kann dabei ein Teilbereich der Fensterscheibenanordnung 2 sein und ist vorliegend außenseitig des in die Oberfläche 7 integrierten Lichtbandes 3 angeordnet.

Konkret ist in Fig. 2 eine Bedienhandlung dargestellt, bei der ein Fahrzeuginsasse mit einem Finger 9 das Symbol 4, das heißt also einen leuchtend hervorgehobenen Teilbereich des Lichtbandes 3, berührt. Dementsprechend ist als Reaktion auf diese Berührung oder Bedienhandlung in der Fensterscheibe 8 mittels des dort angeordneten Bildschirms oder Anzeigebereichs das Interface 5 dargestellt. Die Darstellungsposition des Interfaces 5 ist dabei nicht beliebig oder zufällig gewählt, sondern korreliert mit der Darstellungsposition des Symbols 4. Beispielsweise kann das Interface 5 möglichst nahe an dem Symbol 4 oder in einem vorgegebenen festen Abstand zu diesem oder in einer vorgegebenen räumlichen Beziehung zu dem Symbol 4 dargestellt werden. Die genaue Darstellungsposition, Darstellungsart, Darstellungsgröße und dergleichen des Interfaces 5 kann variieren und beispielsweise von der Art der mittels des Interfaces 5 dargestellten Informationen oder den über das Interface 5 zugänglichen Funktionalitäten oder dergleichen abhängen.

Durch eine Bewegung des Fingers 9 auf dem Lichtband 3 und entlang des Lichtbandes 3 kann das Symbol 4 ebenfalls entlang des Lichtbandes 3 bewegt oder verschoben werden. Die entsprechende Bewegung ist hier durch einen Pfeil 10 angedeutet. In entsprechender Art und Weise wird dabei auch das Interface 5 entlang der Fensterscheibe 8 bewegt, sodass es in der gleichen räumlichen Relation zu dem Symbol 4 verbleibt, was hier durch einen Pfeil 11 angedeutet ist. Neben einem Verschieben des Symbols 4 und des Interfaces 5 können auch weitere Bedienhandlungen oder Bediengesten vorgesehen und mit entsprechenden individuellen Funktionalitäten oder Effekten verknüpft sein. Beispielsweise kann ein Berühren des Symbols 4 für eine vorgegebene Zeitspanne eine andere Funktion oder einen anderen Effekt auslösen, als ein kürzeres Antippen des Symbols 4.

Es können also durch eine entsprechende Bedienung oder Bedienhandlung effektiv das Symbol 4 und damit auch das Interface 5 verschoben werden, sodass durch den Fahrzeuginsassen insbesondere eine optimale individuelle Positionierung oder Einstellung des Interfaces 5 vorgenommen werden kann. Die automatisch eingestellte oder vorgegeben genaue Position des Symbols 4 und/oder des Interfaces 5 kann also durch den Fahrzeuginsassen feinjustiert oder angepasst werden, entsprechend seinen jeweiligen Wünschen oder Bedürfnissen, beispielsweise hinsichtlich einer Armlänge und somit einer bequemen Erreichbarkeit. Alternativ oder zusätzlich ist es auch denkbar, dass eine Berührung des Lichtbandes 3 an einer anderen Stelle als dem Symbol 4 dazu führt, dass das Symbol 4 an der Stelle der Berührung angezeigt wird und dabei auch die Position des Interfaces 5 entsprechend mit angepasst wird. Um insbesondere in letzterem Fall ein häufiges unbeabsichtigtes Verschieben des Symbols 4 und des Interfaces 5 zu vermeiden, kann alternativ zu einer bezüglich der Oberfläche 7 flächenbündigen Anordnung das Lichtband 3 auch in Fahrzeughochrichtung nach unten in die Oberfläche 7 eingelassen oder gegenüber der Oberfläche 7 zurückversetzt oder versenkt angeordnet sein. Somit kann die Oberfläche 7 beispielsweise problemlose als Armablage genutzt werden, ohne dass dadurch oder dabei unbeabsichtigte Bedienvorgänge ausgelöst werden.

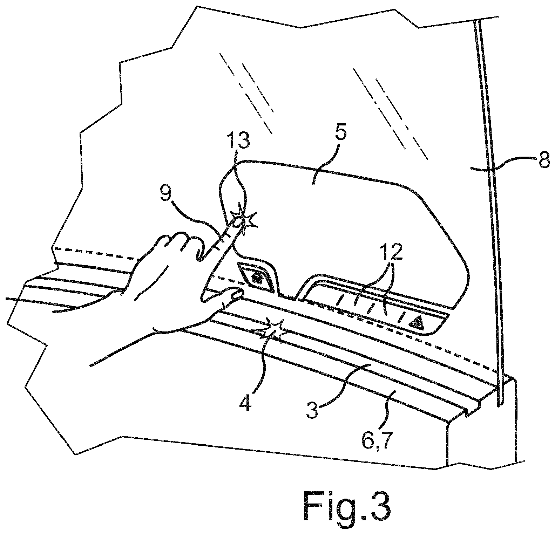

Fig. 3 zeigt eine schematische ausschnittweise und perspektivische Detailansicht der Seitenwand 6 in einer gegenüber der Darstellung aus Fig. 2 anderen Situation und/oder Ausführungsform. Auch hier ist in die Oberfläche 7 das Lichtband 3 integriert und das Symbol 4 als leuchtender Teilbereich des Lichtbandes 3 aktiv. Das hier ebenfalls in der Fensterscheibe 8 dargestellte Interface 5 weist hier eine Mehrzahl von Bedienelementen 12 auf, über welche verschiedene Menüebenen, Funktionalitäten oder dergleichen aufrufbar, zugänglich oder bedienbar sind. In der vorliegend dargestellten Situation führt der Fahrzeuginsasse durch Berühren des Interfaces 5 mit dem Finger 9 eine Bedienhandlung aus. Besonders vorteilhaft ist es dabei vorgesehen, dass die Berührung des Interface 5 und/oder ein Registrieren oder erfolgreiches Ausführen der Bedienhandlung durch einen Leuchteffekt 13 an einem Ort der Berührung angezeigt oder verdeutlicht wird.

Über das Interface 5 können zahlreiche verschiedene Funktionalitäten zugänglich und eine große Vielfalt unterschiedlicher Informationen abrufbar und darstellbar sein. Dies kann beispielsweise Funktionalitäten des Kraftfahrzeugs betreffen, welche bei herkömmlichen bekannten Fahrzeugen bisher beispielsweise in einem Kombiinstrument in einer Instrumententafel und/oder in einem Bildschirm oder einer Anzeigeeinrichtung beispielsweise eines Navigationssystems oder eines Unterhaltungs- und/oder Medienwiedergabesystems dargestellt werden. Darüber hinaus ist insbesondere jedoch auch eine Darstellung von beispielsweise über eine kabellose Datenverbindung abgerufenen Informationen denkbar.

Bevorzugt ist es vorgesehen, dass das Interface 5 nach einer vorgegebenen Zeitspanne ohne Bedienhandlung wieder ausgeblendet wird. Dadurch kann vorteilhaft ein Energieverbrauch minimiert und eine unnötige Beeinträchtigung eines Sichtbereiches oder Blickfeldes des oder der Fahrzeuginsassen vermieden werden. Ein derartiges automatisches Ausblenden des Interfaces 5 kann jedoch, beispielsweise über eine entsprechende Einstellung oder beispielsweise bei einer laufenden Medienwiedergabe, verhindert werden.

Das Symbol 4 kann auch in der Fensterscheibenanordnung 2 - etwa in einem in Fahrzeughochrichtung unteren Teilbereich - mittels des dort vorgesehenen Bildschirms oder Anzeigebereichs angezeigt oder dargestellt werden.

## Patentansprüche

1. Fahrzeug (1) mit einer Erkennungseinrichtung zum Erkennen einer Eigenschaft eines Fahrzeuginsassen und einer mit der Erkennungseinrichtung gekoppelten und einen Anzeigebereich (2, 3, 8) aufweisenden Bedien- und Anzeigevorrichtung, welche zur Darstellung von Informationen (5, 12) in dem Anzeigebereich (2, 3, 8) eingerichtet ist und mittels welcher in Abhängigkeit von der erfassten Eigenschaft in dem Anzeigebereich (2, 3, 8) ein Symbol (4) darstellbar ist, wobei die mittels der Erkennungseinrichtung erkannte Eigenschaft eine Position des Fahrzeuginsassen ist und die Bedien- und Anzeigevorrichtung dazu eingerichtet ist, das Symbol (4) in einer in Abhängigkeit von der erkannten Position bestimmten Anzeigeposition in einem Teil (3) des Anzeigebereichs (2, 3, 8) darzustellen,
**dadurch gekennzeichnet, dass**
- die Bedien- und Anzeigevorrichtung dazu eingerichtet ist, das Symbol (4) dem Fahrzeuginsassen derart zuzuordnen, dass es bei einer in ihrem Ausmaß über einen vorgegebenen Schwellenwert hinausgehenden Positionsveränderung des Fahrzeuginsassen diesem folgt,
- der Anzeigebereich (2, 3, 8) aus mehreren disjunkten Teilen (2, 3, 8) gebildet ist, wobei ein Teil (3) zur Darstellung des Symbols (4) verschieden ist von einem Teil (2, 8) zur Darstellung der Informationen (5, 12),
- derjenige dieser Teile (2, 3, 8), in dem das Symbol (4) dargestellt wird, ein berührungs- und/oder annäherungssensitives Lichtband (3) aus einer Vielzahl von nebeneinander angeordneten Lichtquellen ist, wobei das Symbol (4) jeweils ein gegenüber dem übrigen Lichtband (3) abgehobener begrenzter Teilbereich des Lichtbandes (3) ist,
- das Symbol (4) als Bedienelement ausgebildet ist, durch dessen Bedienung die Informationen (5, 12) in dem Anzeigebereich (2, 8) in dem zur Darstellung der Informationen (5, 12) vorgesehenen Teil des Anzeigebereiches (2, 8) in einer Darstellungsposition aufrufbar sind, die mit der Anzeigeposition des Symbols (4) über eine vorgegebene räumliche Beziehung korreliert ist, wobei bei der Positionsveränderung des Fahrzeuginsassen auch die Darstellungsposition der Informationen (5, 12) bewegt wird, sodass diese in derselben räumlichen Beziehung zu der Anzeigeposition des Symbols (4) verbleibt.

2. Fahrzeug (1) nach Anspruch 1,
**dadurch gekennzeichnet, dass**
das Fahrzeug (1) eine Fensterscheibenanordnung (2, 8) aufweist, welche zumindest bereichsweise zumindest als Teil (2, 8) des Anzeigebereichs (2, 3, 8) ausgebildet ist.

3. Fahrzeug (1) nach einem der vorhergehenden Ansprüche,
**dadurch gekennzeichnet, dass**
der Anzeigebereich (2, 3, 8) zumindest bereichsweise als aktiver Bildschirm und/oder als mittels Berührung bedienbares Bedienelement (3, 5, 12) ausgebildet ist.

4. Fahrzeug (1) nach Anspruch 3,
**dadurch gekennzeichnet, dass**
die auf die Bedienung des Symbols (4) hin in dem Anzeigebereich (2, 8) dargestellten Informationen (5, 12) hinsichtlich des Fahrzeuginsassen, der die Bedienung vorgenommen hat, personalisiert sind.

5. Fahrzeug (1) nach einem der vorhergehenden Ansprüche,
**dadurch gekennzeichnet, dass**
der Anzeigebereich (3) zur Darstellung des Symbols (4) an einem eine Fensterscheibenanordnung (2, 8) des Fahrzeugs (1) zumindest teilweise einfassenden Rahmenteil (6, 7) angeordnet ist.

6. Fahrzeug (1) nach einem der vorhergehenden Ansprüche,
**dadurch gekennzeichnet, dass**
- die Erkennungseinrichtung dazu eingerichtet ist, gleichzeitig die jeweilige Position mehrerer Fahrzeuginsassen zu erkennen, und
- mittels der Bedien- und Anzeigevorrichtung gleichzeitig ein jeweiliges Symbol (4) in einem jeweiligen in Abhängigkeit von der erkannten Position bestimmten Teilbereich des Anzeigebereichs (2, 3, 8) darstellbar ist.

7. Fahrzeug (1) nach Anspruch 6,
**dadurch gekennzeichnet, dass**
die Bedien- und Anzeigevorrichtung dazu eingerichtet ist, jedem der Fahrzeuginsassen jeweils zumindest eines der gleichzeitig dargestellten Symbole (4) derart zuzuordnen, dass das jeweilige Symbol (4) bei einer Positionsveränderung des jeweiligen Fahrzeuginsassen diesem folgt.

8. Fahrzeug (1) nach einem der vorhergehenden Ansprüche,
**dadurch gekennzeichnet, dass**
mittels der Erkennungseinrichtung der Fahrzeuginsasse, insbesondere eine Mehrzahl von Fahrzeuginsassen, identifizierbar ist.

9. Verfahren zum Betreiben eines Fahrzeugs (1) mit einer Erkennungseinrichtung zum Erkennen einer Eigenschaft zumindest eines Fahrzeuginsassen und einer mit der Erkennungseinrichtung gekoppelten und einen Anzeigebereich (2, 3, 8) aufweisenden Bedien- und Anzeigevorrichtung, mittels welcher Informationen (5, 12) in dem Anzeigebereich (2, 3, 8) darstellbar sind, bei dem
- mittels der Erkennungseinrichtung als Eigenschaft des zumindest einen Fahrzeuginsassen fortlaufend eine jeweilige Position des zumindest einen Fahrzeuginsassen erkannt wird und
- mittels der Bedien- und Anzeigevorrichtung in einer in Abhängigkeit von der jeweils erkannten Position des jeweiligen Fahrzeuginsassen bestimmten Anzeigeposition in einem Teils des Anzeigebereichs (2, 3, 8) ein jeweiliges dem Fahrzeuginsassen zugeordnetes Symbol (4) dargestellt wird,
**dadurch gekennzeichnet, dass**
- das Symbol (4) dem Fahrzeuginsassen derart zugeordnet wird, dass es bei einer in ihrem Ausmaß über einen vorgegebenen Schwellenwert hinausgehenden Positionsveränderung des Fahrzeuginsassen diesem folgt,
- das Symbol (4) in einem als berührungs- und/oder annäherungssensitives Lichtband (3) aus einer Vielzahl von nebeneinander angeordneten Lichtquellen ausgebildeten Teil (3) des Anzeigebereiches (2, 3, 8) dargestellt wird, der von einem Teil (2, 8) disjunkt ist, in dem die Informationen (5, 12) dargestellt werden,
- das Symbol (4) jeweils als ein gegenüber dem übrigen Lichtband (3) abgehobener begrenzter Teilbereich des Lichtbandes (3) dargestellt wird,
- die Informationen (5, 12) auf eine Bedienung des als Bedienelement ausgebildeten Symbols (4) in einer Darstellungsposition dargestellt werden, die mit der Anzeigeposition des Symbols (4) über eine vorgegebene räumliche Beziehung korreliert ist, und
- bei der Positionsveränderung des Fahrzeuginsassen auch die Darstellungsposition der Informationen (5, 12) bewegt wird, sodass diese in derselben räumlichen Beziehung zu der Anzeigeposition des Symbols (4) verbleibt.

## Claims

1. Vehicle (1) having a detection device for detecting a characteristic of a vehicle occupant and an operator control and display device coupled with the detection device and having a display region (2, 3, 8), which operator control and display device is configured for displaying items of information (5, 12) in the display region (2, 3, 8) and by means of which depending on the detected characteristic a symbol (4) can be shown in the display region (2, 3, 8), wherein the characteristic recognised by means of the detection device is a position of the vehicle occupant and the operator control and display device is configured to display the symbol (4) in a display position specified depending on the recognised position in a part (3) of the display region (2, 3, 8),
**characterised in that**
- the operator control and display device is configured to assign the symbol (4) to the vehicle occupant such that, in the case of a change of position, exceeding in its extent a predetermined threshold value, of the vehicle occupant, it follows said vehicle occupant,
- the display device (2, 3, 8) is formed of several disjunct parts (2, 3, 8), wherein a part (3) for the representation of the symbol (4) is different from a part (2, 8) for the representation of the items of information (5, 12),
- the one of these parts (2, 3, 8), in which the symbol (4) is represented, is a touch-sensitive and/or proximity-sensitive light strip (3) made of a multiplicity of light sources disposed next to one another, wherein the symbol (4) is in each case a limited part-region of the light strip (3) raised in contrast to the remainder of the light strip (3),
- the symbol (4) is formed as an operating element, by means of the operation of which the items of information (5, 12) in the display region (2, 8) in the part, provided for the representation of the items of information (5, 12), of the display region (2, 8) can be accessed in a representation position which is correlated with the display position of the symbol (4) via a predetermined spatial relationship, wherein when the vehicle occupant changes position also the representation position of the items of information (5, 12) is moved, such that this remains in the same spatial relationship to the display position of the symbol (4).

2. Vehicle (1) according to claim 1,
**characterised in that**
the vehicle (1) has a window pane arrangement (2, 8) which is formed at least sectionally as a part (2, 8) of the display region (2, 3, 8).

3. Vehicle (1) according to any of the preceding claims,
**characterised in that**
the display region (2, 3, 8) is formed at least sectionally as an active screen and/or as an operating element (3, 5, 12) which can be operated by means of touch.

4. Vehicle (1) according to claim 3,
**characterised in that**
the items of information (5, 12) represented in reaction to the operation of the symbol (4) in the display region (2, 8) are personalised with respect to the vehicle occupant which has undertaken the operation.

5. Vehicle (1) according to any of the preceding claims,
**characterised in that**
the display region (3) is disposed for the representation of the symbol (4) on a frame part (6, 7) including at least partially a window pane arrangement (2, 8) of the vehicle (1).

6. Vehicle (1) according to any of the preceding claims,
**characterised in that**
- the detection device is configured to recognise simultaneously the respective position of several vehicle occupants, and
- by means of the operator control and display device simultaneously a respective symbol (4) can be represented in a part-region, specified depending on the recognised position, of the display region (2, 3, 8).

7. Vehicle (1) according to claim 6,
**characterised in that**
the operator control and display device is configured to assign to each of the vehicle occupants respectively at least one of the simultaneously represented symbols (4) such that the respective symbol (4) in the case of a position alteration of the respective vehicle occupant follows said vehicle occupant.

8. Vehicle (1) according to any of the preceding claims,
**characterised in that**
by means of the detection device the vehicle occupant, in particular a plurality of the vehicle occupants, can be identified.

9. Method for operating a vehicle (1) with a detection device for detecting a characteristic of at least one vehicle occupant and an operator control and display device coupled with the detection device and having a display region (2, 3, 8), by means of which operator control and display device items of information (5, 12) can be displayed in the display region (2, 3, 8), in the case of which
- by means of the detection device, as characteristic of the at least one vehicle occupant, continuously a respective position of the at least one vehicle occupant is recognised and
- by means of the operator control and display device, in a display position, specified depending on the respectively recognised position of the respective vehicle occupant, in a part of the display region (2, 3, 8), a respective symbol (4) is displayed assigned to the vehicle occupant,
**characterised in that**
- the symbol (4) is assigned to the vehicle occupant such that it follows said vehicle occupant in the case of a position alteration of the vehicle occupant exceeding in its extent a predetermined threshold value,
- the symbol (4) is displayed in a part (3), formed as a touch-sensitive and/or proximity sensitive light strip (3) made of a multiplicity of light sources arranged next one another, of the display region (2, 3, 8), which is disjunct from a part (2, 8) in which the items of information (5, 12) are displayed,
- the symbol (4) is displayed respectively as a limited partial region, raised with respect to the remainder of the light strip (3), of the light strip (3),
- the items of information (5, 12) in response to an operation of the symbol (4) formed as an operating element, are shown in a representation position, which is correlated via a predetermined spatial relationship with the display position of the symbol (4), and
when the vehicle occupant changes position also the representation position of the items of information (5, 12) is moved, such that this remains in the same spatial relationship to the display position of the symbol (4).

## Revendications

1. Véhicule (1) avec un dispositif de détection destiné à détecter une propriété d'un occupant de véhicule et un dispositif de commande et d'affichage couplé au dispositif de détection et présentant une zone d'affichage (2, 3, 8), lequel est conçu pour représenter des informations (5, 12) dans la zone d'affichage (2, 3, 8) et au moyen duquel un symbole (4) peut être représenté dans la zone d'affichage (2, 3, 8) en fonction de la propriété détectée, dans lequel la propriété détectée au moyen du dispositif de détection est une position de l'occupant de véhicule et le dispositif de commande et d'affichage est conçu pour représenter le symbole (4) dans une partie (3) de la zone d'affichage (2, 3, 8) dans une position d'affichage déterminée en fonction de la position détectée,
**caractérisé en ce que**
- le dispositif de commande et d'affichage est conçu pour associer le symbole (4) à l'occupant de véhicule, de telle sorte qu'il suit celui-ci lors d'un changement de position de l'occupant de véhicule allant au-delà d'une valeur seuil prédéfinie dans son ampleur,
- la zone d'affichage (2, 3, 8) est formée de plusieurs parties (2, 3, 8) disjointes, dans lequel une partie (3) destinée à représenter le symbole (4) est différente d'une partie (2, 8) destinée à représenter les informations (5, 12),
- celle de ces parties (2, 3, 8) dans laquelle le symbole (4) est représenté est une bande lumineuse (3) sensible au toucher et/ou rapprochement composée d'une pluralité de sources de lumière disposées les unes à côté des autres, dans lequel le symbole (4) est respectivement une zone partielle délimitée de la bande lumineuse (3) faisant saillie par rapport à la bande lumineuse (3) restante,
- le symbole (4) est réalisé en tant qu'élément de commande, par la commande duquel les informations (5, 12) dans la zone d'affichage (2, 8) dans la partie de la zone d'affichage (2, 8) prévue pour la représentation des informations (5, 12) peuvent être appelées dans une position de représentation, qui est corrélée avec la position d'affichage du symbole (4) par l'intermédiaire d'une relation spatiale prédéfinie, dans lequel, lors du changement de position de l'occupant de véhicule, la position de représentation des informations (5, 12) est également déplacée, de sorte que celle-ci reste dans la même relation spatiale par rapport à la position d'affichage du symbole (4),

2. Véhicule (1) selon la revendication 1,
**caractérisé en ce que**
le véhicule (1) présente un ensemble de vitres (2, 8), lequel est réalisé au moins par endroits au moins en tant que partie (2, 8) de la zone d'affichage (2, 3, 8).

3. Véhicule (1) selon l'une quelconque des revendications précédentes,
**caractérisé en ce que**
la zone d'affichage (2, 3, 8) est réalisée au moins par endroits en tant qu'écran actif et/ou en tant qu'élément de commande (3, 5, 12) pouvant être commandé au moyen d'un toucher.

4. Véhicule (1) selon la revendication 3,
**caractérisé en ce que**
les informations (5, 12) représentées dans la zone d'affichage (2, 8) à la suite de la commande du symbole (4) concernant l'occupant de véhicule, qui a effectué la commande, sont personnalisées.

5. Véhicule (1) selon l'une quelconque des revendications précédentes,
**caractérisé en ce que**
la zone d'affichage (3) destinée à représenter le symbole (4) est disposée sur une partie cadre (6, 7) bordant au moins en partie un ensemble de vitres (2, 8) du véhicule (1).

6. Véhicule (1) selon l'une quelconque des revendications précédentes,
**caractérisé en ce que**
- le dispositif de détection est conçu pour détecter simultanément la position respective de plusieurs occupants du véhicule, et
- un symbole (4) respectif peut être représenté simultanément au moyen du dispositif de commande et d'affichage dans une zone partielle respective, déterminée en fonction de la position détectée, de la zone d'affichage (2, 3, 8)

7. Véhicule (1) selon la revendication 6,
**caractérisé en ce que**
le dispositif de commande et d'affichage est conçu pour associer à chacun des occupants de véhicule respectivement au moins un des symboles (4) représentés simultanément, de telle sorte que le symbole (4) respectif, lors d'un changement de position de l'occupant de véhicule respectif, suit celui-ci.

8. Véhicule (1) selon l'une quelconque des revendications précédentes,
**caractérisé en ce que**
en particulier une pluralité d'occupants de véhicule peut être identifiée au moyen du dispositif de détection des occupants de véhicule.

9. Procédé pour faire fonctionner un véhicule (1) avec un dispositif de détection destiné à détecter une propriété d'au moins un occupant de véhicule et un dispositif de commande et d'affichage couplé au dispositif de détection et présentant une zone d'affichage (2, 3, 8), au moyen duquel des informations (5, 12) peuvent être représentées dans la zone d'affichage (2, 3, 8), selon lequel
- une position respective de l'au moins un occupant de véhicule est détectée en continu au moyen du dispositif de détection en tant que propriété de l'au moins un occupant de véhicule et
- un symbole (4) respectif associé à l'occupant de véhicule est représenté au moyen du dispositif de commande et d'affichage dans une partie de la zone d'affichage (2, 3, 8) dans une position d'affichage déterminée en fonction de la position respectivement détectée de l'occupant de véhicule respectif,
**caractérisé en ce que**
- le symbole (4) est associé à l'occupant de véhicule, de telle façon qu'il suit celui-ci lors d'un changement de position de l'occupant de véhicule allant au-delà d'une valeur seuil prédéfinie dans son ampleur,
- le symbole (4) est représenté dans une partie (3), réalisée en tant que bande lumineuse (3) sensible au toucher et/ou rapprochement composée d'une pluralité de sources de lumière disposées les unes à côté des autres, de la zone d'affichage (2, 3, 8), qui est disjointe d'une partie (2, 8) dans laquelle les informations (5, 12) sont représentées,
- le symbole (4) est représenté respectivement en tant que zone partielle délimitée de la bande lumineuse (3), faisant saillie par rapport à la bande lumineuse (3) restante,
- les informations (5, 12) sur une commande du symbole (4) réalisé en tant qu'élément de commande sont représentées dans une position de représentation qui est corrélée à la position d'affichage du symbole (4) par l'intermédiaire d'une relation spatiale prédéfinie, et
- lors du changement de position de l'occupant de véhicule, la position de représentation des informations (5, 12) est également déplacée, de sorte que celle-ci reste dans la même relation spatiale par rapport à la position d'affichage du symbole (4).
